# EUROPEAN PATENT SPECIFICATION

(11) **EP 2 946 079 B1**
(45) Date of publication and mention of the grant of the patent: **19.05.2021**
(21) Application number: 13872174.1
(22) Date of filing: 15.01.2013
(51) Int. Cl.: F01D 5/18, B22D 30/00, F01D 11/08, F01D 25/12, F01D 9/02, F02C 7/18, F23R 3/00

(54) **GAS TURBINE ENGINE COMPONENT HAVING TRANSVERSELY ANGLED IMPINGEMENT RIBS**
BAUTEIL EINES GASTURBINENTRIEBWERKS MIT QUER ABGEWINKELTEN PRALLLIPPEN
ÉLÉMENT DE MOTEUR DE TURBINE À GAZ, DOTÉ DE NERVURES D'IMPACT INCLINÉES TRANSVERSALEMENT

(43) Date of publication of application: 25.11.2015
(73) Proprietor: Raytheon Technologies Corporation, Farmington, CT 06032 (US)
(72) Inventor: PROPHETER-HINCKLEY, Tracy A., Manchester, Connecticut 06042 (US); QUACH, San, East Hartford, Connecticut 06108 (US); DEVORE, Matthew A., Cromwell, Connecticut 06416 (US)
(74) Representative: Dehns
(86) International application number: PCT/US2013/021509
(87) International publication number: WO 2014/112968

(56) References cited:
- EP-A2- 1 314 855
- EP-A2- 1 467 064
- EP-A2- 1 793 083
- EP-A2- 1 895 097
- EP-A2- 1 921 272
- US-B1- 6 206 638
- US-B1- 7 597 539
- US-B1- 7 985 049
- US-B1- 7 985 049
- US-B2- 7 674 093

## Description

### BACKGROUND

This disclosure relates to a gas turbine engine, and more particularly to a component that can include transversely angled impingement ribs.

Gas turbine engines typically include a compressor section, a combustor section and a turbine section. In general, during operation, air is pressurized in the compressor section and is mixed with fuel and burned in the combustor section to generate hot combustion gases. The hot combustion gases flow through the turbine section which extracts energy from the hot combustion gases to power the compressor section and other gas turbine engine loads.

Due to exposure to hot combustion gases, numerous components of the gas turbine engine may include cooling circuits that receive and circulate cooling airflow to cool various internal and external surfaces of the components during engine operation. Certain portions of these components may be difficult to cool notwithstanding the internal cooling circuits US6,206,638 B1, EP1793083A2,

US7,985,049B1, EP1895097A2, EP1467064A2, EP1921272, EP1314855A2 disclose examples of cooled gas turbine engine components and casting systems for manufacturing said components.

### SUMMARY

A gas turbine engine component according to an embodiment of the present disclosure is provided as claimed in claim 1 and includes, among other things, a body portion that includes a first wall spaced apart from a second wall and disposed about a centerline axis. At least one rib extends between the first wall and the second wall. The at least one rib extends along a rib axis that is transversely angled relative to the centerline axis. At least one impingement hole extends through the at least one rib.

Other embodiments of the gas turbine engine component are set forth in the dependent claims 2-9.

A casting system for manufacturing a gas turbine engine component according to an exemplary aspect of the present disclosure is provided as claimed in claim 10 and includes, among other things, a casting article that represents the dimensional negative of a cooling circuit of the gas turbine engine component. The casting article includes at least one transversely angled opening that is configured to form at least one rib at a transverse angle relative to a centerline axis of the gas turbine engine component.

In a further embodiment of the foregoing casting system for manufacturing a gas turbine engine component, the casting article is a core.

In a further embodiment of either of the foregoing casting systems for manufacturing a gas turbine engine component, the casting article is a shell.

In a further non-limiting example of any of the foregoing casting systems for manufacturing a gas turbine engine component, the casting article includes at least one opening and at least one indent.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 illustrates a schematic, cross-sectional view of a gas turbine engine.
Figure 2 illustrates a component that can be incorporated into a gas turbine engine.
Figure 3 illustrates a cross-sectional view of a component.
Figure 4 illustrates another cross-sectional view of a portion of a component.
Figure 5 illustrates yet another cross-sectional view of a portion of a component.
Figure 6 illustrates a cross-sectional view of another component that can be incorporated into a gas turbine engine.
Figure 7 illustrates portions of the rib incorporated into a gas turbine component according to the invention.
Figure 8 illustrates a casting article used to manufacture a gas turbine engine component having a cooling circuit with transversely angled impingement ribs according to the invention.

### DETAILED DESCRIPTION

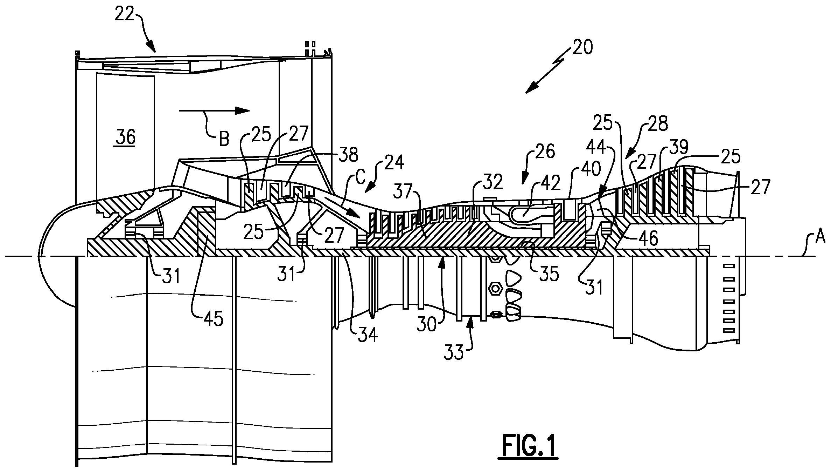

Figure 1 schematically illustrates a gas turbine engine 20. The exemplary gas turbine engine 20 is a two-spool turbofan engine that generally incorporates a fan section 22, a compressor section 24, a combustor section 26 and a turbine section 28. Alternative engines might include an augmenter section (not shown) among other systems for features. The fan section 22 drives air along a bypass flow path B, while the compressor section 24 drives air along a core flow path C for compression and communication into the combustor section 26. The hot combustion gases generated in the combustor section 26 are expanded through the turbine section 28. Although depicted as a turbofan gas turbine engine in the disclosed non-limiting embodiment, it should be understood that the concepts described herein are not limited to turbofan engines and these teachings could extend to other types of engines, including but not limited to, three-spool engine architectures.

The gas turbine engine 20 generally includes a low speed spool 30 and a high speed spool 32 mounted for rotation about an engine centerline longitudinal axis A. The low speed spool 30 and the high speed spool 32 may be mounted relative to an engine static structure 33 via several bearing systems 31. It should be understood that other bearing systems 31 may alternatively or additionally be provided.

The low speed spool 30 generally includes an inner shaft 34 that interconnects a fan 36, a low pressure compressor 38 and a low pressure turbine 39. The inner shaft 34 can be connected to the fan 36 through a geared architecture 45 to drive the fan 36 at a lower speed than the low speed spool 30. The high speed spool 32 includes an outer shaft 35 that interconnects a high pressure compressor 37 and a high pressure turbine 40. In this embodiment, the inner shaft 34 and the outer shaft 35 are supported at various axial locations by bearing systems 31 positioned within the engine static structure 33.

A combustor 42 is arranged between the high pressure compressor 37 and the high pressure turbine 40. A mid-turbine frame 44 may be arranged generally between the high pressure turbine 40 and the low pressure turbine 39. The mid-turbine frame 44 can support one or more bearing systems 31 of the turbine section 28. The mid-turbine frame 44 may include one or more airfoils 46 that extend within the core flow path C.

The inner shaft 34 and the outer shaft 35 are concentric and rotate via the bearing systems 31 about the engine centerline longitudinal axis A, which is colinear with their longitudinal axes. The core airflow is compressed by the low pressure compressor 38 and the high pressure compressor 37, is mixed with fuel and burned in the combustor 42, and is then expanded over the high pressure turbine 40 and the low pressure turbine 39. The high pressure turbine 40 and the low pressure turbine 39 rotationally drive the respective high speed spool 32 and the low speed spool 30 in response to the expansion.

Each of the compressor section 24 and the turbine section 28 may include alternating rows of rotor assemblies and vane assemblies (shown schematically) that carry airfoils that extend into the core flow path C. For example, the rotor assemblies can carry a plurality of rotating blades 25, while each vane assembly can carry a plurality of vanes 27 that extend into the core flow path C. The blades 25 of the rotor assemblies create or extract energy (in the form of pressure) from the core airflow that is communicated through the gas turbine engine 20 along the core flow path C. The vanes 27 of the vane assemblies direct the core airflow to the blades 25 to either add or extract energy.

Various components of a gas turbine engine 20, including but not limited to the airfoils of the blades 25 and the vanes 27 of the compressor section 24 and the turbine section 28, may be subjected to repetitive thermal cycling under widely ranging temperatures and pressures. The hardware of the turbine section 28 is particularly subjected to relatively extreme operating conditions. Therefore, some components may require internal cooling circuits for cooling the parts during engine operation. Example cooling circuits that include features such transversely angled impingement ribs are discussed below.

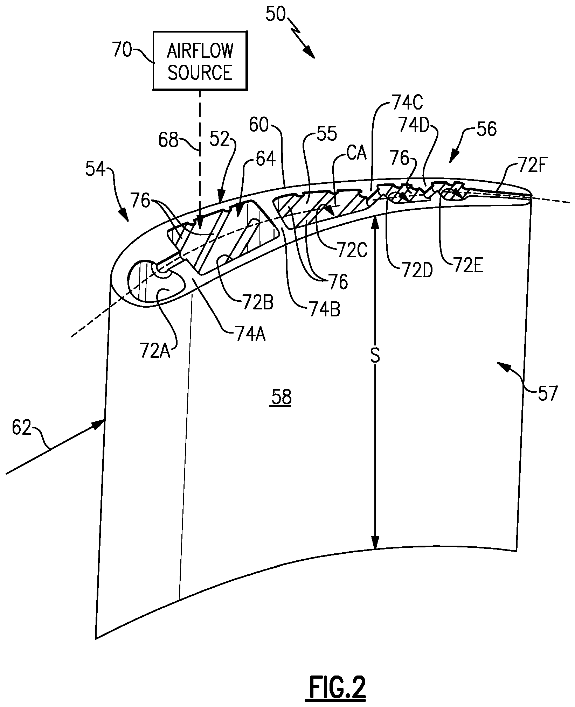

Figure 2 illustrates a component 50 that can be incorporated into a gas turbine engine, such as the gas turbine engine 20 of Figure 1. The component 50 includes a body portion 52 that axially extends between a leading edge portion 54 and a trailing edge portion 56. The body portion 52 also includes a first wall 58 (e.g., a pressure side wall) and a second wall 60 (e.g., a suction side wall) that are spaced apart from one another and disposed about a centerline axis CA of the body portion 52. That is, the centerline axis CA is equidistant from the first wall 58 and the second wall 60.

The body portion 52 is representative of an airfoil. For example, the body portion 52 could be an airfoil that extends between inner and outer platforms (not shown) where the component 50 is a vane, or could extend from platform and root portions (also not shown) where the component 50 is a blade.

A gas path 62 is communicated axially downstream through the gas turbine engine 20 along the core flow path C in a direction that extends from the leading edge portion 54 toward the trailing edge portion 56 of the body portion 52. The gas path 62 represents the communication of core airflow along the core flow path C (see Figure 1). The body portion 52 can also extend radially across a span S.

A cooling circuit 64 may be disposed within the body portion 52 for cooling the internal and external surfaces of the component 50. The cooling circuit 64 can include one or more cavities 72 that may be formed by using ceramic cores or other known techniques. The cavities 72 may extend radially, axially and/or circumferentially inside of the body portion 52 to establish cooling passages for receiving a cooling airflow 68 to cool the component 50. The cooling airflow 68 may be communicated into one or more of the cavities 72 from an airflow source 70 that is external to the component 50.

The cooling airflow 68 is generally of a lower temperature than the airflow of the gas path 62 that is communicated across the body portion 52. In one particular example, the cooling airflow 68 is a bleed airflow that can be sourced from the compressor section 24 or any other portion of the gas turbine engine 20 that is upstream from the component 50. The cooling airflow 68 can be circulated through the cooling circuit 64 to transfer thermal energy from the component 50 to the cooling airflow 68 thereby cooling the internal and external surfaces of the component 50.

The cooling circuit 64 includes a first cavity 72A (i.e., a leading edge cavity), a second cavity 72B (i.e., a first intermediate cavity), a third cavity 72C (i.e., a second intermediate cavity), a fourth cavity 72D (i.e., a first trailing edge cavity), a fifth cavity 72E (i.e., a second trailing edge cavity) and a sixth cavity 72F (i.e., a trailing edge exit cavity). However, the cooling circuit 64 could alternatively include a greater or fewer number of cavities. The cavities 72A, 72B, 72C, 72D, 72E and 72F can communicate the cooling airflow 68 through the cooling circuit 64, such as along a serpentine path, to cool the body portion 52. In other words, the cavities 72A-72F may be in fluid communication with one another in order to circulate the cooling airflow 68 throughout the cooling circuit 64.

Ribs 74 extend between the first wall 58 and the second wall 60 of the body portion 52. In this particular embodiment, a first rib 74A is positioned between the first cavity 72A and the second cavity 72B, a second rib 74B is positioned between the second cavity 72B and the third cavity 72C, a third rib 74C is positioned between the third cavity 72C and the fourth cavity 72D, and a fourth rib 74D is positioned between the fourth cavity 72D and the fifth cavity 72E. The ribs 74 may also radially extend across the span S of the body portion 52.

At least one of the ribs 74 is transversely angled (i.e., non-perpendicularly angled) relative to the centerline axis CA of the body portion 52. In this way, the cooling airflow 68 can be communicated through openings in the ribs 74 such that it directly impinges upon specific portions of the body portion 52 that may require a more dedicated supply of cooling airflow 68, as is discussed in greater detail below. The ribs 74C and 74D, which are positioned within the trailing edge portion 56 of the body portion 52, are transversely angled relative to the centerline axis CA. However, this disclosure is not intended to be limited to this arrangement. It should be understood that any rib 74 at any position within the component 50 could be transversely angled relative to the centerline axis CA.

The first wall 58 and the second wall 60 include interior surfaces 55 as well as exterior surfaces 57 (i.e., gas path surfaces). The interior surfaces 55 are remote from the gas path 62 and establish portions of the cooling circuit 64, whereas the exterior surfaces 57 are positioned within the gas path 62. In one embodiment, the interior surfaces 55 can include a plurality of augmentation features 76. The plurality of augmentation features 76 are disposed along the radial span of the interior surface 55 within the body portion 52 and can increase the heat transfer of the cooling airflow 68 as it impinges on or moves along the interior surfaces 55. The plurality of augmentation features 76 may include turbulators, trip strips, pin fins or other features.

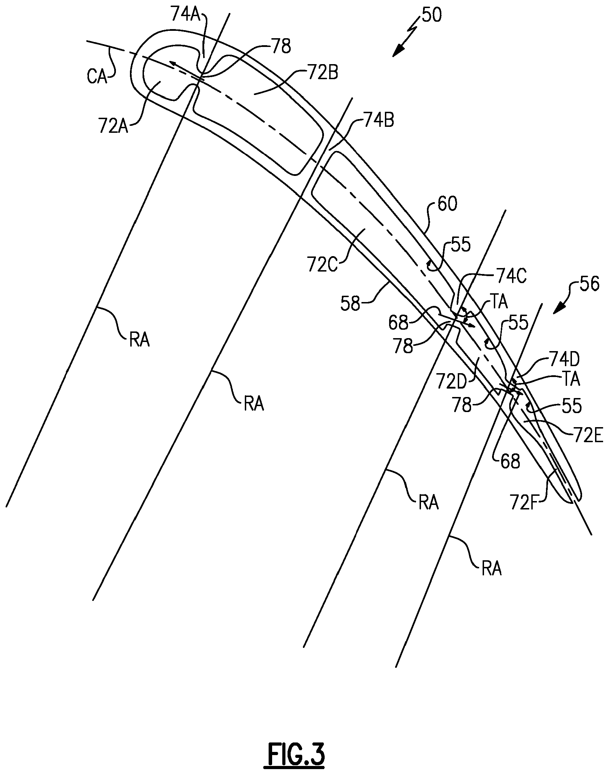

Referring to Figure 3, at least one of the ribs 74 of the component 50 is transversely angled relative to the centerline axis CA. The third rib 74C and the fourth rib 74D, which are located at the trailing edge portion 56, are transversely angled at transverse angles TA relative to the centerline axis CA. In other words, a rib axis RA of each of the ribs 74C and 74D extends at a non-perpendicular angle relative to the centerline axis CA. In another example, the ribs 74C and 74D are angled such that they extend generally parallel to the ribs 74A and 74B (i.e., rib axes RA are parallel to one another).

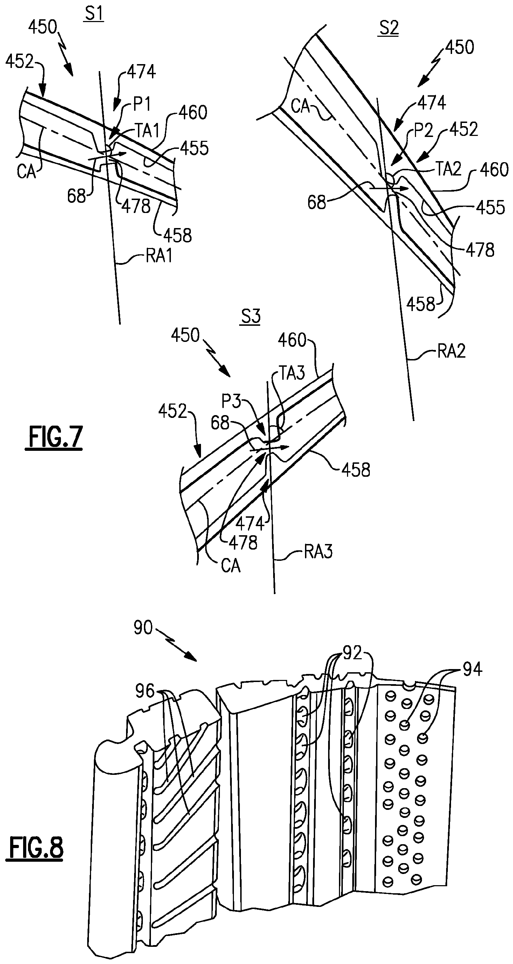

The ribs 74 include one or more impingement holes 78 that extend through the ribs 74. In the illustrated embodiment, the third rib 74C and the fourth rib 74D include impingement holes 78 that fluidly connect the adjacent cavities 72C and 72D and 72D and 72E, respectively. Although only a single impingement hole 78 is illustrated through the ribs 74C, 74D of this cross-sectional view, it should be understood that one or both of the ribs 74A, 74C, 74D could include a plurality of impingement holes 78 disposed along a radial dimension of the ribs 74C, 74D (see, for example, Figure 7). The impingement holes 78 may embody any of a variety of sizes and shapes.

The impingement holes 78 may extend through the ribs 74 in a direction that is generally perpendicular to a rib axis RA of each rib 74A, 74C, 74D. In this embodiment, the impingement holes 78 of the third rib 74C and the fourth rib 74D are oriented toward the second wall 60 such that cooling airflow 68 that is communicated through the impingement holes 78 can directly impinge upon the interior surface 55 of the second wall 60. This particular arrangement may be effective for cooling the suction side of the component 50. However, this disclosure is not limited to this arrangement.

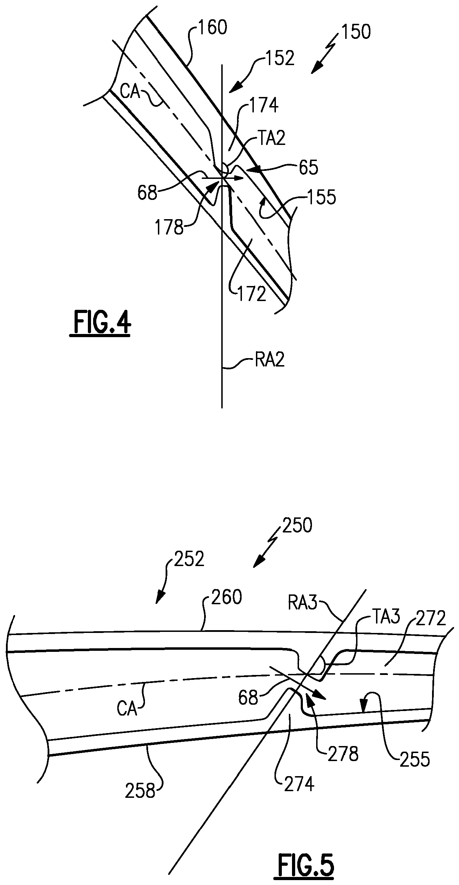

The extent of the transverse angle TA between the rib axis RA and the centerline axis CA for a rib 74 can vary depending upon the size, shape and cooling requirements of a given component 50. For example, Figure 4 illustrates another exemplary rib 174 that can be incorporated into a body portion 152 of a component 150. In this disclosure, like reference numerals signify like features, and reference numerals in multiples of "100" can signify slightly modified features. The rib 174 could be disposed at any location of the component 150 including at a leading edge portion of the component 150, a trailing edge portion of the component 150, or at a location between the leading edge portion and the trailing edge portion. A rib axis RA2 of the rib 174 can extend at a transverse angle TA2 relative to the centerline axis CA. The transverse angle TA2 is thus a greater angle than the transverse angle TA illustrated by Figure 3.

The impingement hole 178 of the rib 174 is oriented toward a second wall 160 of the component 150 such that cooling airflow 68 that is communicated through the impingement hole 178 can directly impinge upon an interior surface 155 of the second wall 160. For example, the transverse angle TA2 may provide for impingement at a leading edge portion 65 of the interior surface 155 within a cavity 172 of the component 150.

Figure 5 illustrates another exemplary rib 274 that can be incorporated into a body portion 252 of a component 250. In this embodiment, a rib axis RA3 of the rib 274 extends at a transverse angle TA3 relative to the centerline axis CA. An impingement hole 278 of the rib 274 may be oriented toward a first wall 258 rather than the second wall 260 of the component 250 such that cooling airflow 68 that is communicated through the impingement hole 278 can directly impinge upon an interior surface 255 of the first wall 258 within a cavity 272. This exemplary arrangement may be particularly effective for cooling portions of the pressure side of the component 250, for example.

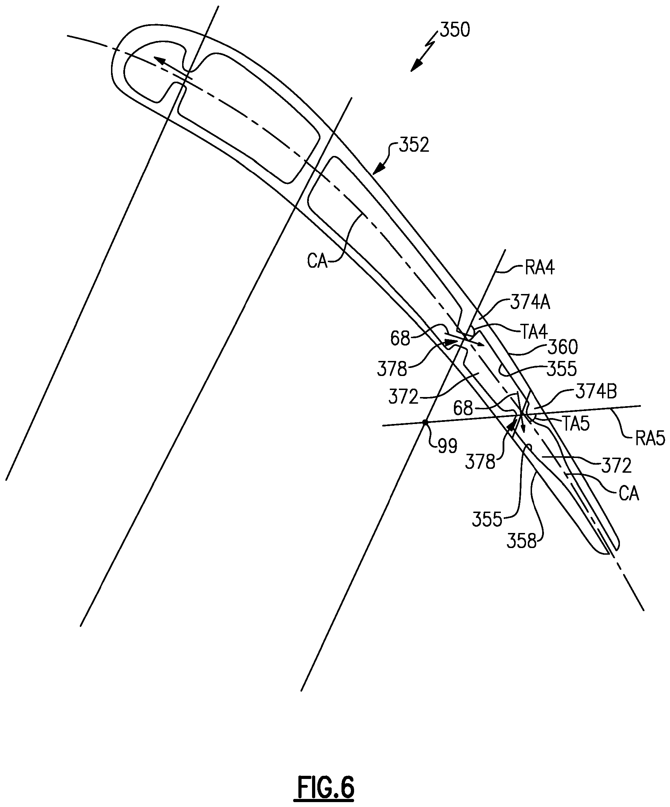

Figure 6 illustrates yet another component 350 having a body portion 352 that can include a first rib 374A and a second rib 374B. A rib axis RA4 of the first rib 374A may be transversely angled at a transverse angle TA4 relative to the centerline axis CA, and a rib axis RA5 of the second rib 374B may be transversely angled at a transverse angle TA5 relative to the centerline axis CA. In this example, the transverse angle TA4 is different (e.g., a greater angle) than the transverse angle TA5. In yet another embodiment, the rib axes RA4 and RA5 intersect one another at intersection point 99.

The ribs 374A, 374B may include impingement holes 378 that extend through the ribs 374A, 374B. The impingement hole 378 of the first rib 374A may be oriented toward a second wall 360 of the body portion 352 and the impingement hole 378 of the second rib 374B may be oriented toward a first wall 358 of the body portion 352. In this way, the cooling airflow 68 that is communicated through the impingement holes 378 can directly impinge upon interior surfaces 355 of both the first wall 358 and the second wall 360 within different cavities 372 of the component 350 (i.e., the impingements can occur at different axial locations of the component 350). This exemplary arrangement may be particularly effective for cooling portions of both the pressure side and the suction side of the component 350, for example.

Figure 7 illustrates multiple cross-sectional slices S1, S2 and S3 of the rib 474 that can be incorporated into a body portion 452 of component 450. The cross-sectional slices S1, S2 and S3 represent different radial locations of the rib 474.

As shown in the cross-sectional slice S1, the rib 474 includes a first portion P1 that extends along a rib axis RA1 that is angled at a first transverse angle TA1 relative to the centerline axis CA. Cross-sectional slice S2 illustrates a second portion P2 of the rib 474 that is located at a different radial location than the first portion P1 of the rib 474. The second portion P2 extends along a rib axis RA2 that is angled at a second transverse angle TA2 relative to the centerline axis CA. In this embodiment, the first transverse angle TA1 and the second transverse angle TA2 are different angles. The rib 474 includes impingement holes 478 that are oriented toward one of a first wall 458 and a second wall 460. In this manner, the cooling airflow 68 that is communicated through the rib 474 can be directed to impinge upon different portions of the interior surface 455 of either the first wall 458 or the second wall 460 at a single axial location of the component 450.

As shown in cross-sectional slice S3, the rib 474 can include a third portion P3 that extends along a rib axis RA3 that is angled at a third transverse angle TA3 relative to the centerline axis CA. In this embodiment, an impingement hole 478 of the third portion P3 is oriented toward the first wall 458 rather than the second wall 460 (as shown in cross-sectional slices S1 and S2). In this manner, the cooling airflow 68 can also be communicated to impinge upon both the first wall 458 and the second wall 460 at a single axial location of the component 450.

Figure 8 illustrates the casting article 90 used as part of a casting system to manufacture a gas turbine engine component having a cooling circuit with transversely angled impingement ribs. In one embodiment, the casting article is a core. The casting article 90 may be a ceramic core, a refractory metal core (RMC), a hybrid core (for example, a combination of a ceramic core and a RMC core) or any other type of core that can be used in a casting operation. The casting article 90 could also be a shell. In this embodiment, the casting article 90 represents the dimensional negative of the cooling circuit 64 that is formed within the component 50.

The casting article 90 can include a plurality of transversely angled openings 92. The plurality of transversely angled openings 92 form the transversely angled ribs 74 of the cooling circuit 64 during a casting process. The casting article 90 can also include additional features such as round openings 94 and indents 96 for forming additional features into the component 50 during a casting process, such as pedestals and/or trip strips.

It should be understood that like reference numerals identify corresponding or similar elements throughout the several drawings. It should also be understood that although a particular component arrangement is disclosed and illustrated in these exemplary embodiments, other arrangements could also benefit from the teachings of this disclosure.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A gas turbine engine (20) component (50;150;250;350;450) comprising
a body portion (52;152;252;352;452) that includes a first wall (58;158;258;358;458) spaced apart from a second wall (60;160;260;360;460) and disposed about a centerline axis (CA) of the cross section of the component, wherein the first wall is a pressure side wall and the second wall is a suction side wall;
at least one rib (74;174;274;374;474) that extends between said first wall (58;158;258;358;458) and said second wall (60;160;260;360;460), wherein said at least one rib (74;174;274;374;474) extends along a rib axis (RA) that is transversely angled relative to said centerline axis (CA); and
at least one impingement hole (78;178;278;378;478) that extends through said at least one rib (74;174;274;374;474) in a direction that is generally perpendicular to said rib axis (RA), and wherein said at least one impingement hole (78;178;278;378;478) is oriented toward said first wall (58;158;258;358;458), or is oriented toward said second wall (60;160;260;360;460);
wherein the at least one impingement hole is configured to communicate a cooling airflow to impinge upon an interior surface of the second wall; and
**characterized in that** said at least one rib (74;174;274;374;474) includes a first impingement hole (78;178;278;378;478) that is oriented toward said first wall (58;158;258;358;458) and a second impingement hole (78;178;278;378;478) that is oriented toward said second wall (60;160;260;360;460);
wherein the second impingement hole is located at a different radial location of the rib than the first impingement hole.

2. The component as recited in claim 1, wherein said body portion (52;152;252;352;452) is an airfoil of a blade (25) or a vane (27).

3. The component as recited in claim 1 or 2, comprising a cooling circuit (64) disposed within said body portion (52;152;252;352;452) and including at least a first cavity (72A) and a second cavity (72B) in fluid communication with said first cavity.

4. The component as recited in any preceding claim, comprising a second rib (74B) that extends between said first wall (58;158;258;358;458) and said second wall (60;160;260;360;460), wherein said second rib (74B) extends along a second rib axis (RA) that is transversely angled at a different angle relative to said centerline axis (CA) than said rib axis (RA) of said at least one rib (74;174;274;374;474).

5. The component as recited in any preceding claim, wherein said at least one rib (74;174;274;374;474) is positioned within a trailing edge portion (56) of said body portion (52;152;252;352;452).

6. The component as recited in any preceding claim, wherein an interior surface (55;155;255;355;455) of at least one of said first wall (58;158;258;358;458) and said second wall (60;160;260;360;460) includes a plurality of augmentation features (76).

7. The component as recited in any preceding claim, wherein said at least one impingement hole (78;178;278;378;478) fluidly connects a/the first cavity (72A) and a/the second cavity (72B) of said component (50;150;250;350;450).

8. The component as recited in any preceding claim, wherein a first portion (PI) of said at least one rib (74;174;274;374;474) extends along a first rib axis (RA1) that is angled at a first angle (TA1) relative to said centerline axis (CA) and a second portion (P2) of said at least one rib (74;174;274;374;474) extends along a second rib axis (RA2) that is angled at a second angle (TA2) relative to said centerline axis.

9. The component as recited in claim 8, wherein said first portion (P1) and said second portion (P2) are located at different radial locations of said at least one rib (74;174;274;374;474).

10. A casting system for manufacturing a gas turbine engine component (50;150;250;350;450) as claimed in claim 1, the casting system comprising a casting article (90) that represents the dimensional negative of a cooling circuit (64) of the gas turbine engine component (50;150;250;350;450), wherein the casting article (90) includes at least one transversely angled opening (92) that is configured to form the at least one rib (74;174;274;374;474) at a transverse angle (TA) relative to a centerline axis (CA) of the gas turbine engine component (50; 150;250;3 50;450).

11. The casting article as recited in claim 10, wherein said casting article (90) is a core or a shell.

12. The casting article as recited in claim 10 or 11, wherein said casting article (90) includes at least one opening (94) and at least one indent (96).

## Patentansprüche

1. Bauteil (50;150;250;350;450) eines Gasturbinentriebwerks (20), das Folgendes umfasst:
einen Körperabschnitt (52;152;252;352;452), der eine erste Wand (58;158;258;358;458) beinhaltet, die von einer zweiten Wand (60;160;260;360;460) beanstandet und um eine Mittellinienachse (CA) des Querschnitts des Bauteils angeordnet ist, wobei es sich bei der ersten Wand um eine druckseitige Wand und bei der zweiten Wand um eine saugseitige Wand handelt;
mindestens eine Rippe (74;174;274;374;474), die sich zwischen der ersten Wand (58;158;258;358;458) und der zweiten Wand (60;160;260;360;460) erstreckt, wobei sich die mindestens eine Rippe (74;174;274;374;474) entlang einer Rippenachse (RA) erstreckt, die relativ zu der Mittellinienachse (CA) quer abgewinkelt ist; und
mindestens ein Prallloch (78;178;278;378;478), das sich durch die mindestens eine Rippe (74;174;274;374;474) in einer Richtung erstreckt, die im Allgemeinen senkrecht zu der Rippenachse (RA) ist, und wobei das mindestens eine Prallloch (78;178;278;378;478) in Richtung der ersten Wand (58;158;258;358;458) ausgerichtet ist oder in Richtung der zweiten Wand (60;160;260;360;460) ausgerichtet ist;
wobei das mindestens eine Prallloch dazu konfiguriert ist, einen Kühlluftstrom zu kommunizieren, um auf eine Innenfläche der zweiten Wand aufzuprallen; und
**dadurch gekennzeichnet, dass** die mindestens eine Rippe (74;174;274;374;474) ein erstes Prallloch (78;178;278;378;478), das in Richtung der ersten Wand (58;158;258;358;458) ausgerichtet ist, und ein zweites Prallloch (78;178;278;378;478) beinhaltet, das in Richtung der zweiten Wand (60;160;260;360;460) ausgerichtet ist;
wobei sich das zweite Prallloch an einer von dem ersten Prallloch verschiedenen radialen Stelle der Rippe befindet.

2. Bauteil nach Anspruch 1, wobei es sich bei dem Körperabschnitt (52;152;252;352;452) um ein Schaufelprofil einer Laufschaufel (25) oder einer Leitschaufel (27) handelt.

3. Bauteil nach Anspruch 1 oder 2, das einen Kühlkreislauf (64) umfasst, der innerhalb des Körperabschnitts (52;152;252;352;452) angeordnet ist, und mindestens einen ersten Hohlraum (72A) und einen zweiten Hohlraum (72B) in Fluidkommunikation mit dem ersten Hohlraum beinhaltet.

4. Bauteil nach einem der vorhergehenden Ansprüche, das eine zweite Rippe (74B) umfasst, die sich zwischen der ersten Wand (58;158;258;358;458) und der zweiten Wand (60;160;260;360;460) erstreckt, wobei sich die zweite Rippe (74B) entlang einer zweiten Rippenachse (RA) erstreckt, die in einem von der Rippenachse (RA) der mindestens einen Rippe (74;174;274;374;474) verschiedenen Winkel relativ zu der Mittellinienachse (CA) quer abgewinkelt ist.

5. Bauteil nach einem der vorhergehenden Ansprüche, wobei die mindestens eine Rippe (74;174;274;374;474) innerhalb eines Hinterkantenabschnitts (56) des Körperabschnitts (52;152;252;352;452) positioniert ist.

6. Bauteil nach einem der vorhergehenden Ansprüche, wobei eine Innenfläche (55;155;255;355;455) von mindestens einer der ersten Wand (58;158;258;358;458) und der zweiten Wand (60;160;260;360;460) eine Vielzahl von Verstärkungsmerkmalen (76) beinhaltet.

7. Bauteil nach einem der vorhergehenden Ansprüche, wobei das mindestens eine Prallloch (78;178;278;378;478) einen/den ersten Hohlraum (72A) und einen/den zweiten Hohlraum (72B) des Bauteils (50;150;250;350;450) fluidisch verbindet.

8. Bauteil nach einem der vorhergehenden Ansprüche, wobei sich ein erster Abschnitt (P1) der mindestens einen Rippe (74;174;274;374;474) entlang einer ersten Rippenachse (RA1) erstreckt, die in einem ersten Winkel (TA1) relativ zu der Mittellinienachse (CA) abgewinkelt ist, und sich ein zweiter Abschnitt (P2) der mindestens einen Rippe (74;174;274;374;474) entlang einer zweiten Rippenachse (RA2) erstreckt, die in einem zweiten Winkel (TA2) relativ zu der Mittellinienachse abgewinkelt ist.

9. Bauteil nach Anspruch 8, wobei sich der erste Abschnitt (P1) und der zweite Abschnitt (P2) an verschiedenen radialen Stellen der mindestens einen Rippe (74;174;274;374;474) befinden.

10. Gießsystem zum Herstellen eines Bauteils (50;150;250;350;450) eines Gasturbinentriebwerks nach Anspruch 1, wobei das Gießsystem einen Gießartikel (90) umfasst, der das dimensionale Negativ eines Kühlkreislaufs (64) des Bauteils (50;150;250;350;450) eines Gasturbinentriebwerks darstellt, wobei der Gießartikel (90) mindestens eine quer abgewinkelte Öffnung (92) beinhaltet, die dazu konfiguriert ist, die mindestens eine Rippe (74;174;274;374;474) in einem Querwinkel (TA) relativ zu einer Mittellinienachse (CA) des Bauteils (50;150;250;350;450) eines Gasturbinentriebwerks zu bilden.

11. Gießartikel nach Anspruch 10, wobei es sich bei dem Gießartikel (90) um einen Kern oder eine Schale handelt.

12. Gießartikel nach Anspruch 10 oder 11, wobei der Gießartikel (90) mindestens eine Öffnung (94) und mindestens eine Vertiefung (96) beinhaltet.

## Revendications

1. Élément (50 ; 150 ; 250 ; 350 ; 450) de moteur de turbine à gaz (20) comprenant
une partie de corps (52 ; 152 ; 252 ; 352 ; 452) qui comporte une première paroi (58 ; 158 ; 258 ; 358 ; 458) espacée d'une seconde paroi (60 ; 160 ; 260 ; 360 ; 460) et disposée autour d'un axe central (CA) de la section transversale de l'élément, dans lequel la première paroi est une paroi côté refoulement et la seconde paroi est une paroi côté aspiration ;
au moins une nervure (74 ; 174 ; 274 ; 374 ; 474) qui s'étend entre ladite première paroi (58 ; 158 ; 258 ; 358 ; 458) et ladite seconde paroi (60 ; 160 ; 260 ; 360 ; 460), dans lequel ladite au moins une nervure (74 ; 174 ; 274 ; 374 ; 474) s'étend le long d'un axe de nervure (RA) qui est incliné transversalement par rapport audit axe central (CA) ; et
au moins un trou d'impact (78 ; 178 ; 278 ; 378 ; 478) qui s'étend à travers ladite au moins une nervure (74 ; 174 ; 274 ; 374 ; 474) dans une direction qui est généralement perpendiculaire audit axe de nervure (RA), et dans lequel ledit au moins un trou d'impact (78 ; 178 ; 278 ; 378 ; 478) est orienté vers ladite première paroi (58 ; 158 ; 258 ; 358 ; 458), ou est orienté vers ladite seconde paroi (60 ; 160 ; 260 ; 360 ; 460) ;
dans lequel l'au moins un trou d'impact est conçu pour communiquer un flux d'air de refroidissement devant frapper une surface intérieure de la seconde paroi ; et
**caractérisé en ce que**
ladite au moins une nervure (74 ; 174 ; 274 ; 374 ; 474) comporte un premier trou d'impact (78 ; 178 ; 278 ; 378 ; 478) qui est orienté vers ladite première paroi (58 ; 158 ; 258 ; 358 ; 458) et un second trou d'impact (78 ; 178 ; 278 ; 378 ; 478) qui est orienté vers ladite seconde paroi (60 ; 160 ; 260 ; 360 ; 460) ;
dans lequel le second trou d'impact est situé à un emplacement radial différent de la nervure que le premier trou d'impact.

2. Élément selon la revendication 1, dans lequel ladite partie de corps (52 ; 152 ; 252 ; 352 ; 452) est un profil aérodynamique d'une pale (25) ou d'une aube (27).

3. Élément selon la revendication 1 ou 2, comprenant un circuit de refroidissement (64) disposé à l'intérieur de ladite partie de corps (52 ; 152 ; 252 ; 352 ; 452) et comportant au moins une première cavité (72A) et une seconde cavité (72B) en communication fluidique avec ladite première cavité.

4. Élément selon une quelconque revendication précédente, comprenant une seconde nervure (74B) qui s'étend entre ladite première paroi (58 ; 158 ; 258 ; 358 ; 458) et ladite seconde paroi (60 ; 160 ; 260 ; 360 ; 460), dans lequel ladite seconde nervure (74B) s'étend le long d'un second axe de nervure (RA) qui est incliné transversalement à un angle différent par rapport audit axe central (CA) que ledit axe de nervure (RA) de ladite au moins une nervure (74 ; 174 ; 274 ; 374 ; 474).

5. Élément selon une quelconque revendication précédente, dans lequel ladite au moins une nervure (74 ; 174 ; 274 ; 374 ; 474) est positionnée à l'intérieur d'une partie de bord de fuite (56) de ladite partie de corps (52 ; 152 ; 252 ; 352 ; 452).

6. Élément selon une quelconque revendication précédente, dans lequel une surface intérieure (55 ; 155 ; 255 ; 355 ; 455) d'au moins une de ladite première paroi (58 ; 158 ; 258 ; 358 ; 458) et de ladite seconde paroi (60 ; 160 ; 260 ; 360 ; 460) comporte une pluralité de fonctionnalités d'augmentation (76).

7. Élément selon une quelconque revendication précédente, dans lequel ledit au moins un trou d'impact (78 ; 178 ; 278 ; 378 ; 478) relie de manière fluidique une/la première cavité (72A) et une/la seconde cavité (72B) dudit élément (50 ; 150 ; 250 ; 350 ; 450).

8. Élément selon une quelconque revendication précédente, dans lequel une première partie (P1) de ladite au moins une nervure (74 ; 174 ; 274 ; 374 ; 474) s'étend le long d'un premier axe de nervure (RA1) qui est incliné à un premier angle (TA1) par rapport audit axe central (CA) et une seconde partie (P2) de ladite au moins une nervure (74 ; 174 ; 274 ; 374 ; 474) s'étend le long d'un second axe de nervure (RA2) qui est incliné à un second angle (TA2) par rapport audit axe central.

9. Élément selon la revendication 8, dans lequel ladite première partie (P1) et ladite seconde partie (P2) sont situées à des emplacements radiaux différents de ladite au moins une nervure (74 ; 174 ; 274 ; 374 ; 474).

10. Système de coulage pour la fabrication d'un élément (50 ; 150 ; 250 ; 350 ; 450) de moteur de turbine à gaz selon la revendication 1, le système de coulage comprenant un article de coulage (90) qui représente le négatif dimensionnel d'un circuit de refroidissement (64) de l'élément (50 ; 150 ; 250 ; 350 ; 450) de moteur de turbine à gaz, dans lequel l'article de coulage (90) comporte au moins une ouverture (92) inclinée transversalement qui est conçue pour former l'au moins une nervure (74 ; 174 ; 274 ; 374 ; 474) à un angle transversal (TA) par rapport à un axe central (CA) de l'élément (50 ; 150 ; 250 ; 350 ; 450) de moteur de turbine à gaz.

11. Article de coulage selon la revendication 10, dans lequel ledit article de coulage (90) est un noyau ou une coque.

12. Article de coulage selon la revendication 10 ou 11, dans lequel ledit article de coulage (90) comporte au moins une ouverture (94) et au moins un renfoncement (96).
